# EUROPÄISCHE PATENTSCHRIFT

(11) **EP 3 227 084 B1**
(45) Veröffentlichungstag und Bekanntmachung des Hinweises auf die Patenterteilung: **26.07.2023**
(21) Anmeldenummer: 15862148.2
(22) Anmeldetag: 03.12.2015
(51) Int. Cl.: B29C 49/12

(54) **RECKSTANGE FÜR DEN FORM- UND FÜLLKOPF EINER MASCHINE ZUM FORMEN UND FÜLLEN VON BEHÄLTERN AUS VORFORMLINGEN**
STRETCH ROD FOR THE FORM-AND-FILL HEAD OF A MACHINE FOR FORMING AND FILLING CONTAINERS PRODUCED FROM PREFORMS
TIGE D'ÉTIRAGE POUR LA TÊTE DE FORMAGE ET DE REMPLISSAGE D'UNE MACHINE POUR FORMER ET REMPLIR DES CONTENANTS À PARTIR DE PRÉFORMES

(30) Priorität: 04.12.2014 DE 102014017871
(43) Veröffentlichungstag der Anmeldung: 11.10.2017
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); LITZENBERG, Michael, 22926 Bömsen (DE); CLÜSSERATH, Ludwig, 55543 Bad Kreuznach (DE); KLÖPPER, Gerhard, 22391 Hamburg (DE); MEYER, Niels, 22869 Schenefeld (DE)
(74) Vertreter: Eisenführ Speiser
(86) Internationale Anmeldenummer: PCT/EP2015/002434
(87) Internationale Veröffentlichungsnummer: WO 2016/087044

(56) Entgegenhaltungen:
- EP-A2- 2 105 641
- WO-A1-2011/030183
- WO-A1-2014/173870
- WO-A2-2014/019691
- DE-A1-102013 102 563
- DE-B3-102008 015 776

## Beschreibung

Die vorliegende Erfindung betrifft eine Reckstange für den Form- und Füllkopf einer Maschine zum Formen und Füllen von Behältern aus Vorformlingen gemäß dem Oberbegriff von Anspruch 1.

Herkömmlich werden Behälter, insbesondere Flaschen, im Blasformverfahren durch ein unter Druck in einen vorgeheizten Vorformling einströmendes Formgas geformt Und in einem zweiten Schritt mit einem Füllgut, insbesondere einem flüssigen Füllgut, befüllt. Zur rationelleren Herstellung sind in letzter Zeit Verfahren entwickelt worden, bei denen der vorgeheizte Vorformling nicht durch ein Druckgas, sondern durch das unter Druck zugeführte flüssige Füllgut in einem Schritt geformt und gefüllt werden kann. Ein solches Verfahren ist z.B. aus der DE 10 2010 007 541 A1 oder der WO2014/019691 A2 bekannt.

Vorformlinge für die bekannten Verfahren bestehen aus einem thermoplastischen Kunststoff, beispielsweise PET, PE oder PP, und werden üblicherweise im Spritzgussverfahren hergestellt. Für die Umformung in Behälter ist es dabei unerheblich, ob die Vorformlinge vorher gelagert oder unmittelbar nach ihrer Herstellung dem Umformprozess zugeführt werden.

Damit ein Vorformling in einen Behälter umgeformt werden kann, wird er thermisch konditioniert, also insbesondere erwärmt und mit einem geeigneten Temperaturprofil versehen. Dabei wird der Körper des Vorformlings z.B. auf ca. 120 °C erwärmt und formbar, während der Mündungsbereich nur deutlich niedrigere Temperaturen erreichen darf, da der Vorformling am Mündungsbereich in der Form- und Füllmaschine gehalten wird und sich unter den dort üblichen Haltekräften und beim Formvorgang nicht verformen darf. Der Form- und Füllvorgang erfolgt bei der gleichzeitigen Formung und Füllung von Behältern durch Zufuhr von Füllmedium in einer Form- und Füllmaschine, die üblicherweise über eine Vielzahl von Form- und Füllstationen verfügt, die z.B. an einem umlaufenden Rotor angeordnet sein können. Jede Form- und Füllstation verfügt über einen Form- und Füllkopf und eine Form. In die Form wird ein Vorformling eingelegt und anschließend der Form- und Füllkopf dichtend auf die Mündung des Vorformlings aufgesetzt, so dass durch den Form- und Füllkopf Füllgut unter hohem Druck zugeführt werden kann. Am Form- und Füllkopf ist außerdem eine Reckstange einschließlich ihres Antriebs angeordnet.

Der Formvorgang wird in der Regel durch axiales Recken des Vorformlings mittels der Reckstange eingeleitet, die in axialer Richtung verfahren werden kann, um eine Kraft auf den Boden des Vorformlings auszuüben. Je nach aufgewendeter Kraft kann der Vorformling aktiv axial gereckt werden, oder der Reckvorgang wird lediglich eingeleitet und durch Zufuhr des Formmediums unter Druck fortgesetzt, oder der sich ausformende Behälter wird während des Formvorgangs lediglich geführt, damit sich der Behälter gleichmäßig ausformen kann und die sich bildende Blase in der Form nicht seitlich ausweichen kann.

Die WO 2014/173870 A1 zeigt eine Reckstange für den Form- und Füllkopf einer Maschine zum gleichzeitigen Formen und Füllen von Behältern aus Vorformlingen. Zum Antrieb der Reckstange macht diese Schrift keine Angaben. Die Reckstange ist in einem hohlen Ventilkörper axial verschieblich aufgenommen, der die Reckstange über einen Teillängenbereich umgibt. Sowohl Reckstange als Ventilkörper sind axialbeweglich ausgeführt und angetrieben.

Bei klassischen Blasformverfahren, bei denen die Formung und Füllung des Behälters in separaten Verfahrensschritten und unterschiedlichen Maschinenabschnitten erfolgen, tritt in der Praxis keine Verunreinigung des Reckstabs auf. Eine Ventileinheit und eine damit ausgestattete Streckblasvorrichtung offenbart die DE 10 2008 015 776 B3. Die Ventileinheit wird von einer Reckstange durchsetzt. Zwischen Reckstange und Ventileinheit ist eine die Reckstange umschließende ringförmige Dichtung angeordnet, damit kein Blasgas an der Reckstange entlang entweichen kann. Die DE 10 2013 102 563 A1 beschreibt Anordnungen zur Führung und Dichtung einer Reckstange in einer Blasformmaschine.

Anders bei Verfahren zur gleichzeitigen Formung und Füllung eines Behälters, bei denen der Reckstab mit dem Füllgut in Berührung kommt, oder bei Verfahren, bei denen zeitweise eine Überschneidung der Form- und der Füllphase auftritt und der Reckstab in das Füllgut eintaucht. Es müssen insbesondere bei Flaschenabfüllanlagen zur Abfüllung von Getränken strenge Hygienevorschriften eingehalten werden. Hierzu gehört die regelmäßige Reinigung und Desinfektion. Hier soll im Folgenden zur Vereinfachung durchgehend von Reinigung gesprochen werden. Dabei soll die Möglichkeit der Desinfektion, ob in einem Schritt oder in zwei separaten Schritten, regelmäßig mit eingeschlossen sein.

Die Reinigung soll zur Vermeidung von Standzeiten der betroffenen Maschine so schnell wie möglich durchgeführt werden. Außerdem soll ein Eingriff in eine Maschine, etwa durch die Demontage von zu reinigenden und zu desinfizierenden Teilen, weitestgehend vermieden werden, um die Kontamination einer Maschine durch von außen eingetragene Keime zu verhindern. Die Füllgut führenden Bereiche einer Maschine sollen möglichst von der Umgebung isoliert sein und ohne Öffnung gereinigt werden können.

Für die Reinigung und Desinfektion solcher Maschinen weitgehend ohne Demontage sind verschiedene Verfahren zum sogenannten *"Cleaning in Place"* entwickelt worden, wobei die Bauteile an ihrem Platz verbleiben.

Schwierig ist jedoch nach wie vor die Reinigung und Desinfektion der Reckstange. Die Antriebseinheit der Reckstange ist häufig kompliziert aufgebaut und muss zur Reinigung demontiert werden.

Es ist deshalb Aufgabe der vorliegenden Erfindung, eine Reckstange für den Form- und Füllkopf einer Maschine zum Formen und Füllen von Behältern aus Vorformlingen vorzuschlagen, die ohne Demontage der Reckstange oder anderer Eingriffe gereinigt und/oder desinfiziert werden kann.

Die Aufgabe wird erfindungsgemäß gelöst durch eine Reckstange für den Form- und Füllkopf einer Maschine zum Formen und Füllen von Behältern aus Vorformlingen, die eine Antriebseinheit zur axialen Bewegung der Reckstange umfasst. Zumindest der mit der Reckstange verbundene Teil der Antriebseinheit soll dabei in einer Antriebskammer angeordnet sein, die von den mit Füllgut in Berührung kommenden Bereichen der Reckstange abgedichtet ist. Die erfindungsgemäße Reckstange ist weiter gekennzeichnet durch die kennzeichnenden Merkmale des Anspruchs 1.

Mit der erfindungsgemäßen Ausgestaltung ist es möglich, einen Form- und Füllkopf zu schaffen, der durch CIP-Reinigungsverfahren zu reinigen ist. Der Antrieb der Reckstange befindet sich in einer gegenüber den Füllgut führenden Bereichen des Form- und Füllkopfes isolierten Antriebskammer und wird nicht durch das Füllgut verunreinigt. Eine Reinigung dieses Bereichs ist also nicht erforderlich.

Ein CIP-Reinigungszyklus kann beispielsweise so ablaufen, dass ein Vorformling in die Form eingesetzt und anstelle von Füllgut Reinigungsmedium zugeführt wird. Übliche Drücke für die Reinigung liegen unter 2 bar, so dass der Vorformling nicht verformt wird. Das durch die Anlage geleitetet Reinigungsmedium wird im Vorformling aufgefangen und kann nach Abschluss des Reinigungszyklus entsorgt werden. Es können übliche Vorformlinge oder speziell für den Reinigungszyklus vorgesehene Vorformlinge verwendet werden, die beispielsweise ein vergrößertes Volumen aufweisen, um mehr Reinigungsmedium aufnehmen zu können.

Die Antriebskammer könnte in einer nicht erfindungsgemäßen Ausführungsform der Erfindung mit einer Dichtung abgedichtet sein, deren eine Dichtfläche die Reckstange positionsfest umschließt. Dies kann beispielsweise ein Faltenbalg, ein Rollbalg oder eine dehnbare Manschette sein, insbesondere eine Elastomermanschette. Die andere Dichtfläche befindet sich am Form- und Füllkopf, so dass die Antriebskammer dicht abgeschlossen ist. Ein Faltenbalg kann vorteilhaft auch so ausgestaltet werden, wie in der DE 10 2015 1 10 073.8 beschrieben.

Die Dichtung ist vorzugsweise so ausgeführt, dass sie in einer Position der Reckstange möglichst faltenfrei ist, so dass sie im Rahmen einer CIP-Reinigung gut von Reinigungsmedium umspült werden kann. Bei einem Faltenbalg oder einem Rollbalg wäre das die Position mit ausgefahrener Reckstange, wobei der Faltenbalg gestreckt bzw. der Rollbalg entrollt ist. Bei einer Manschettendichtung kann die Dichtung so ausgeführt sein, dass sie bei in der Ausgangsposition befindlicher Reckstange weitgehend oder vollständig faltenfrei ist.

Erfindungsgemäß ist die Reckstange aber relativ zur Dichtung axial beweglich. Um auch die Dichtung ausreichend reinigen zu können, kann die Reckstange erfindungsgemäß für einen Reinigungsvorgang in eine Position verfahren werden, in der sie nicht mit der Dichtung in Berührung steht. Die Dichtung kann dann in einem CIP- Reinigungszyklus mit Reinigungsmedium umspült werden.

Für die CIP-Reinigung kann die Reckstange beispielsweise nach einer ersten anspruchsgemäßen Ausführungsform so weit nach oben gefahren werden, dass sie aus der Dichtung heraus bewegt wird. In einer anderen erfindungsgemäßen Ausführungsform kann die Reckstange über eine umlaufende Nut in einem Bereich verfügen, der während des Reckvorgangs nicht mit der Dichtung in Berührung kommt. Für den Reinigungsvorgang kann die Reckstange dann so verfahren werden, dass die Nut sich gegenüber der Dichtung befindet. Die Dichtung verliert damit den Kontakt zur Reckstange und kann mit Reinigungsmedium umspült werden. Die Nut kann oberhalb oder unterhalb des Bereichs angeordnet sein, der während des Reckvorgangs mit der Dichtung in Berührung steht, insbesondere angrenzend daran. Die Reckstange kann dann leicht nach oben über ihre Ausgangsposition hinaus oder leicht nach unten über ihre Endposition hinaus verfahren werden, um eine Reinigungsposition einzunehmen.

Befindet sich die Nut oberhalb des während des Reckvorgangs mit der Dichtung in Berührung stehenden Bereichs, so dass sie zur Reinigung über ihre Endposition weiter nach unten gefahren werden muss, so sind weitere Vorkehrungen für den Reinigungsvorgang zu treffen. Da die Reckstange in ihrer Endstellung bereits bis auf die Wandstärke des ausgeformten Behälters mit dem Boden der Form in Berührung kommt, muss für eine weitere Bewegung der Reckstange eine Öffnung im Boden der Form vorgesehen sein, die der Reckstange den zusätzlichen Weg erlaubt. Die Öffnung muss mindestens den Durchmesser der Reckstange und vorzugsweise mindestens den Durchmesser eines Vorformlings aufweisen, der für den Reinigungsvorgang in die Form- und Füllstation eingelegt werden kann. Im beschriebenen Fall müssen spezielle Vorformlinge für den Reinigungsvorgang verwendet werden, die lang genug sind, um die über die Endstellung hinaus verfahrene Reckstange aufnehmen zu können.

Alternativ ist es auch möglich, Vorformlinge mit erhöhtem Mündungsbereich zu verwenden oder für den Reinigungsprozess einen zusätzlichen Kragen zwischen der Mündung des Vorformlings und dem Form- und Füllkopf zu verwenden, der es erlaubt, die Reckstange in ausgefahrener Position in den Vorformling einzuführen. Es versteht sich von selbst, dass alle genannten Varianten auch unabhängig voneinander und in anderer Kombination eingesetzt werden können, also beispielsweise auch spezielle Vorformlinge oder Formen mit Öffnung bei Reinigung der Reckstange in ihrer Ausgangsposition oder oberhalb davon.

In einer alternativen erfindungsgemäßen Ausführungsform mit relativ zur Dichtung axial beweglicher Reckstange kommt als Dichtung eine einseitig druckresistente Dichtung zum Einsatz. Solche Dichtungen können insbesondere als Lippendichtungen ausgeführt sein. Sie sind einseitig druckresistent und in der anderen Richtung bei Druck durchlässig. Solche Dichtungen können beispielsweise so ausgeführt sein, dass sie in einer Richtung den Form- und Fülldruck von bis zu 40 bar aushalten, während in der anderen Richtung bereits der Reinigungsdruck von etwa 2 bar ausreicht, um sie zu öffnen. Während des Form- und Füllprozesses dichtet die Dichtung bei hohem Druck die Antriebskammer gegen das Füllgut ab. Bei einem Reinigungsprozess wird Reinigungsmedium unter niedrigerem Druck in die Antriebskammer geleitet. Die Dichtung wird von der anderen Seite belastet und öffnet sich. Sie verliert den Kontakt zur Reckstange und das Reinigungsmedium kann die Dichtung von allen Seiten umströmen.

Die Antriebseinheit einer erfindungsgemäßen Reckstange kann vorteilhaft eine Magnetkupplung mit einer ersten mit der Reckstange verbundenen Magneteinheit und einer zweiten Magneteinheit umfassen, wobei die erste Magneteinheit in der Antriebskammer und die zweite Magneteinheit außerhalb der Antriebskammer angeordnet ist. Die beiden Magneteinheiten wirken dabei als Magnetkupplung. Die zweite Magneteinheit kann beispielsweise außen am Form- und Füllkopf angeordnet sein und durch einen geeigneten Antrieb axial verschiebbar sein. Durch das Magnetfeld wird die erste Magneteinheit, mit der die Reckstange verbunden ist, gekoppelt, so dass sich auch die Reckstange bewegt.

Eine oder beide Magneteinheiten können Permanentmagnete sein oder aus Spulen bestehen. Werden Spulen verwendet, können diese ortsfest montiert sein und ihre Magnetfelder so gesteuert werden, dass die Reckstange wie gewünscht bewegt wird.

Vorzugsweise stützt sich die erste Magneteinheit innerhalb der Antriebskammer beabstandet von den Kammerwänden ab, um von Reinigungsmedium umspült werden zu können. Dies kann beispielsweise durch kleine Stützelemente, vorzugsweise drei, geschehen, die vorzugsweise geringe Berührungsflächen an den Kammerwänden aufweisen. Alternativ kann auch die Magneteinheit derart geformt und dimensioniert sein, dass sie mit ihren Kanten an den Wänden anliegt, insbesondere dreieckig, quadratisch oder rechteckig.

Verschiedene Ausführungsbeispiele der Erfindung werden im Folgenden anhand der beigefügten Abbildungen näher erläutert, die Folgendes darstellen:
- Fig. 1a bis 1c: zeigen schematisch eine Form- und Füllstation einer Maschine zum gleichzeitigen Formen und Füllen von Flaschen aus Vorformlingen mit einer ersten Ausführungsform einer erfindungsgemäßen Reckstange, die einen CIP-Reinigungsvorgang erlaubt, im Schnitt;
- Fig. 2a bis 2c: zeigen schematisch eine zweite Ausführungsform einer erfindungsgemäβen Reckstange im Schnitt;
- Fig. 3a und 3b: zeigen schematisch eine dritte Ausführungsform einer erfindungsgemäβen Reckstange im Schnitt;
- Fig. 4a und 4b: zeigen schematisch eine vierte Ausführungsform einer nicht-erfindungsgemäßen Reckstange im Schnitt;
- Fig. 5: zeigt schematisch eine fünfte Ausführungsform einer erfindungsgemäβen Reckstange im Schnitt;
- Fig. 6a bis 6d: zeigen schematisch Antriebe für eine erfindungsgemäße Reckstange;
- Fig. 7a und 7b: zeigen schematisch eine weitere Ausführungsform einer Reckstange im Schnitt.

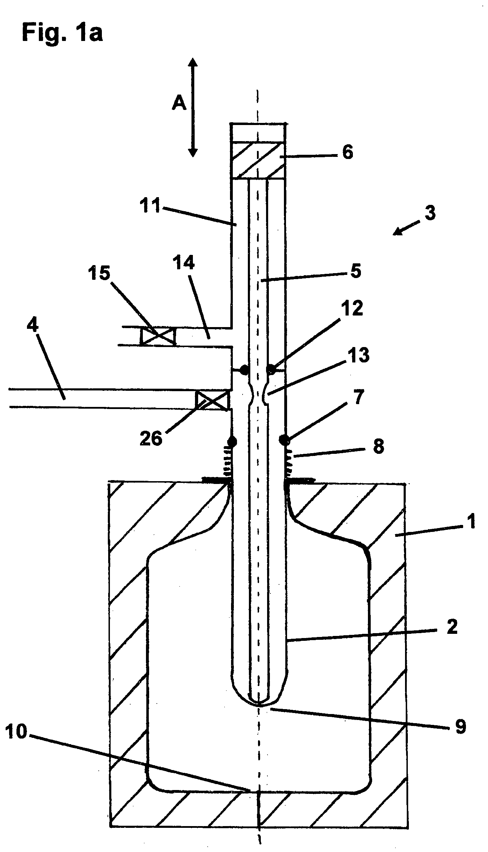

In den Figuren 1a bis 1c ist schematisch eine Form- und Füllstation einer Maschine zum gleichzeitigen Formen und Füllen von Flaschen aus Vorformlingen dargestellt. Die Form- und Füllstation besteht im Wesentlichen aus dem Form- und Füllkopf 3 und der Form 1, innerhalb der ein Vorformling 2 durch unter Druck zugeführtes Füllgut in einen Behälter umgeformt wird.

In Figur 1a ist der Beginn der Form- und Füllphase dargestellt, in der ein Vorformling 2 in eine Form 1 eingelegt ist. Der Form- und Füllkopf 3 umfasst eine Zuleitung 4 mit Füllventil 26 für unter hohem Druck zugeführtes flüssiges Füllgut sowie eine Reckstange 5, die mittels einer Antriebseinheit 6 in axialer Richtung A bewegt werden kann. Der Form- und Füllkopf 3 ist mittels der Dichtung 7 dichtend auf die Mündung 8 des Vorformlings 1 aufgesetzt.

Zu Beginn der Form- und Füllphase befindet sich die Reckstange 5 im Anschlag oder annähernd im Anschlag mit dem Boden 9 des Vorformlings 1. Zum Umformen und gleichzeitigen Füllen des Behälters wird dann durch Öffnung des Füllventils 26 Füllgut durch die Zuführleitung 4 unter Druck zugeführt und die Reckstange 5 gleichzeitig in axialer Richtung nach unten in Richtung Boden 10 der Form 1 verschoben.

Die Reckstange 5 wird durch die hier nicht weiter beschriebene Antriebseinheit 6 bewegt, die sich in einer gegen die Füllgut führenden Bereiche des Form- und Füllkopfes abgeschlossenen Antriebskammer 11 befindet. Die Antriebskammer 11 ist im dargestellten Ausführungsbeispiel gegenüber den Füllgut führenden Bereichen durch eine die Reckstange 5 umfassende Dichtung 12 abgedichtet.

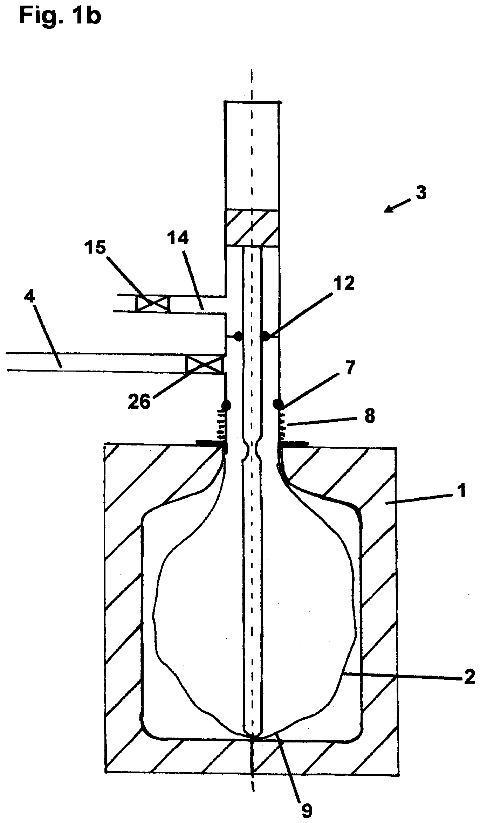

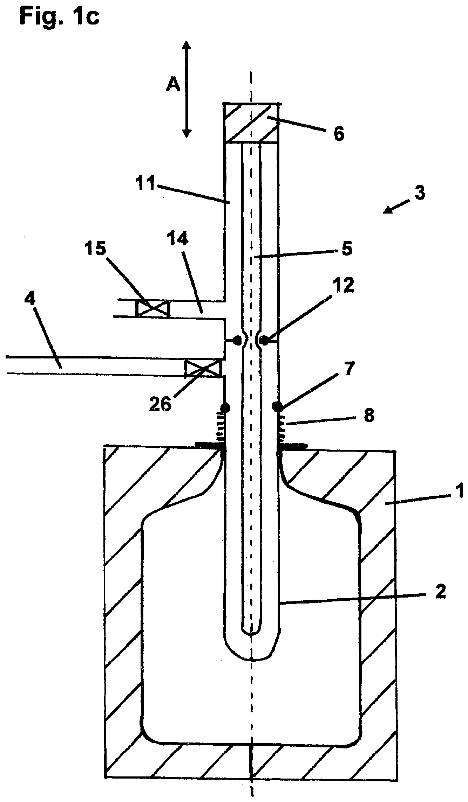

Wie in Figur 1 b dargestellt, verformt sich der Vorformling 2 im Laufe des Form- und Füllvorgangs zunächst zu einer Blase. Die Verformung wird dann im weiteren Verlauf durch die Wand der Form 1 begrenzt und der Behälter ausgeformt. Während der Verformung des Vorformlings führt die Reckstange 5 den Boden 9 des Vorformlings bzw. des sich ausbildenden Behälters 2, indem sie auf den Boden 9 immer eine Mindestreckkraft ausübt. Die sich bildende Blase kann somit nicht seitlich ausweichen und die gleichmäßige Ausbildung des Behälters ist gewährleistet.

Die Füllgut führenden Bereiche des Form- und Füllkopfes 3 müssen in regelmäßigen Intervallen gereinigt werden. Hierzu werden diese Bereiche mit einem Reinigungsmedium gespült, wobei ein Vorformling in die Form eingelegt wird, sofern nicht gleichzeitig auch die Form gereinigt werden soll.

Die erfindungsgemäße Reckstange kann in eine Position gebracht werden, die eine vollständige Reinigung ohne Demontage von Anlagenteilen ermöglicht. Diese Position ist in Figur 1c dargestellt. Die Reckstange 5 weist hierfür eine umlaufende Einschnürung in Form einer Nut 13 auf, die in einem Bereich der Reckstange angeordnet ist, der während des Reckvorgangs nicht mit der Dichtung 12 in Berührung steht. Im dargestellten Ausführungsbeispiel befindet sich die Nut 13 unterhalb dieses Bereichs.

Damit auch die Dichtung 12, die die Reckstange 5 umschließt, ausreichend gereinigt werden kann, ist die Reckstange in eine Position verfahrbar, in der sich die Dichtung 12 gegenüber der Nut 13 befindet. Die Reckstange 5 kann hierfür über ihre Ausgangsposition hinaus nach oben gefahren werden. Die Dichtung 12 steht damit nicht mehr in Berührung mit der Reckstange 5. Die Reckstange sowie die Dichtung 12 sind vollständig zugänglich und können mit Reinigungsmedium umspült werden. Reinigungsmedium kann hierfür entweder durch die Füllgutzuleitung 4 oder durch die zur Kammer 11 führende Reinigungsleitung 14 mit Absperrventil 15 oder eine Kombination daraus zugeführt werden.

Der für den Reinigungsprozess verwendete Vorformling 2 kann ein üblicher Vorformling sein oder gegenüber den üblichen Vorformlingen ein verändertes Volumen aufweisen, um das für die Reinigung verwendete Volumen an Reinigungsmedium aufnehmen zu können. Es kann auch eine hier nicht dargestellte Kappe anstelle eines Vorformlings verwendet werden, die vorzugsweise eine Ableitung aufweist, mit der das Reinigungsmedium abgeleitet oder in den Kreislauf zurückgeleitet werden kann.

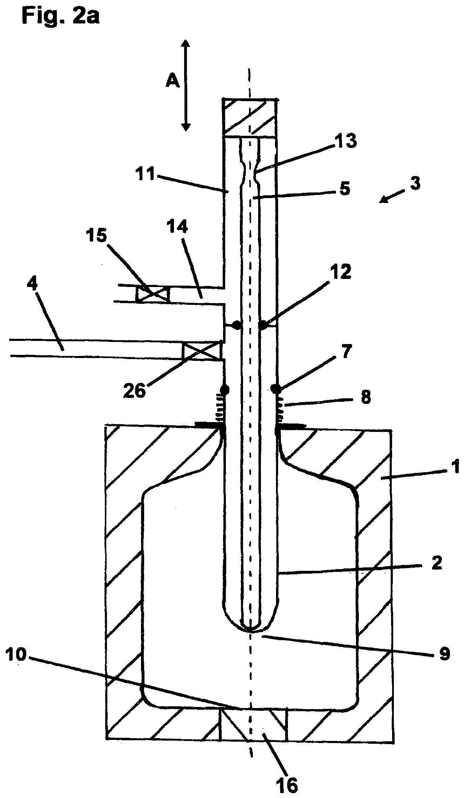

Das Ausführungsbeispiel in Figur 2a entspricht im Wesentlichen dem Ausführungsbeispiel aus Figur 1a, wobei die Nut 13 in diesem Fall oberhalb des Bereichs der Reckstange angeordnet ist, der während des Reckvorgangs mit der Dichtung in Berührung steht.

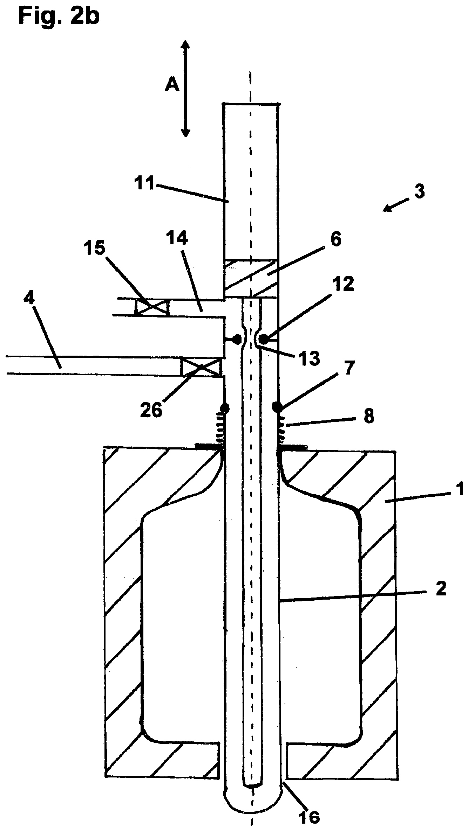

Die Reckstange kann dann, wie in Figur 2b dargestellt, in eine Reinigungsposition verfahren werden, indem sie über ihre übliche Endposition hinaus nach unten abgesenkt wird, so dass sich Nut 13 und Dichtung 12 gegenüberstehen. Wiederum ist ein Vorformling 2 für die CIP-Reinigung in die Form 1 eingesetzt. Da die Reckstange 5 gemäß diesem Ausführungsbeispiel weiter nach unten als üblich gefahren werden muss, ist der für die Reinigung verwendete Vorformling 2 länger als ein üblicher Vorformling. Die Form 1 weist eine verschließbare Öffnung 16 im ihrem Boden 10 auf, die vor Einleitung des Reinigungsbetriebs geöffnet werden muss.

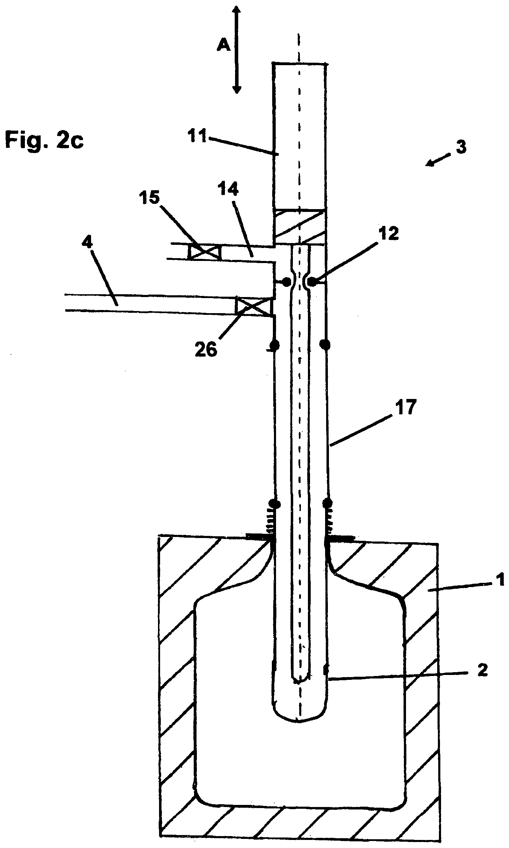

Damit bei einer Anordnung wie in Figur 2b gezeigt keine modifizierte Form und besondere Vorformlinge verwendet werden müssen, ist es auch möglich, für die CIP-Reinigung einen zusätzlichen Kragen 17 zwischen Vorformling 2 und Form- und Füllstation 3 einzusetzen, wie in Figur 2c dargestellt.

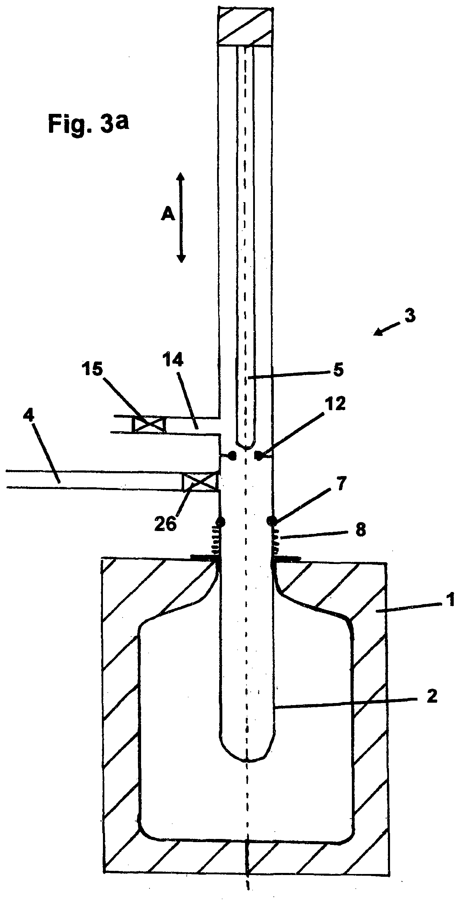

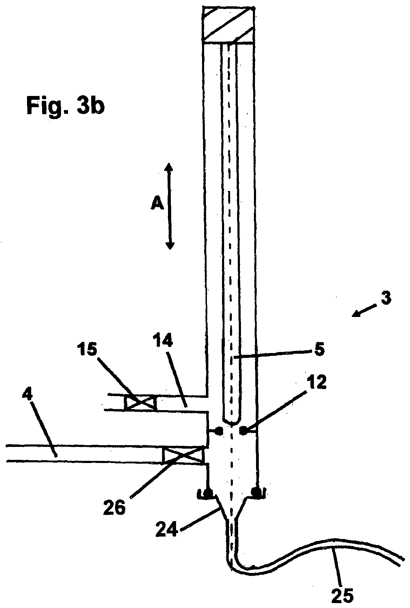

In den Figuren 3a und 3b ist ein drittes Ausführungsbeispiel einer erfindungsgemäßen Reckstange dargestellt, das von den Ausführungsbeispielen der Figuren 1 und 2 dadurch abweicht, dass die Reckstange 5 keine umlaufende Nut aufweist. Das Gehäuse der Antriebseinheit ist in dieser Ausführungsform allerdings derart nach oben verlängert, dass die Reckstange 5 über ihre Ausgangsposition hinaus nach oben verfahren werden kann, und zwar so weit, dass sie nicht mehr mit der Dichtung 12 in Kontakt steht. Die CIP-Reinigung ist wiederum durch Einleitung eines Reinigungsmediums durch die Füllgutzuleitung 4 oder durch die zur Antriebskammer 11 führende Reinigungsleitung 14 oder eine Kombination daraus möglich. Im Ausführungsbeispiel gemäß Figur 3a wird ein üblicher Vorformling 2 zum Auffangen des Reinigungsmediums verwendet. In der Ausführungsform gemäß Figur 3b wird der Form- und Füllkopf 3 statt mit einem Vorformling mit einer separaten Reinigungskappe 24 verbunden, durch die das Reinigungsmedium aufgefangen und über die Ableitung 25 einem nicht dargestellten Auffangbehälter zugeführt oder wieder in den Kreislauf zurückzirkuliert werden kann. Solche Reinigungskappen können alternativ zu Vorformlingen mit jeder der beschriebenen Ausführungsformen der Erfindung eingesetzt werden, wobei die Form der Reinigungskappe der Position der Reckstange in der Reinigungsposition anzupassen ist. Es können auch entsprechend vorbereitete Vorformlinge mit einer Ableitung für das Reinigungsmedium verwendet werden. Sofern die Vorformlinge in die Form als Halteelement eingesetzt werden, kann in der Form eine Öffnung zur Durchführung der Ableitung vorgesehen sein.

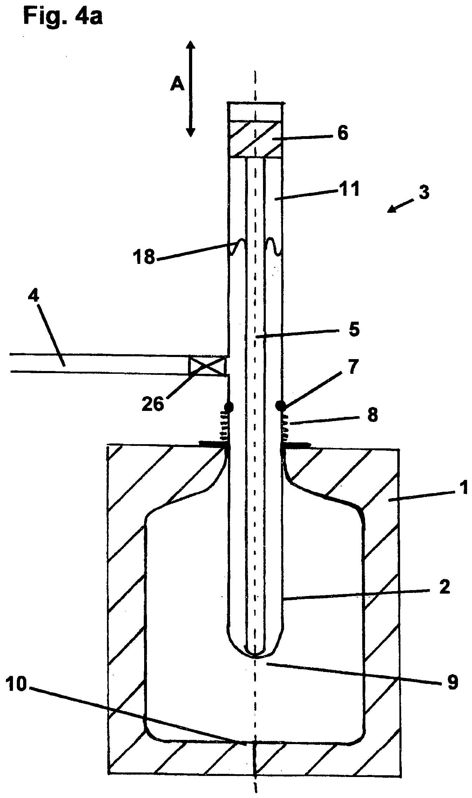

Die in Figur 4a dargestellte Ausführungsform einer nicht-erfindungsgemäßen Reckstange weist als Dichtung eine elastische Membran 18 auf, die die Antriebskammer 11 von den Füllgut führenden Bereichen des Form- und Füllkopfes 3 trennt. Die Membran 18 ist so angebracht, dass sie in der Ausgangsposition der Reckstange 5, die in Figur 4a dargestellt ist, entspannt, aber weitgehend faltenfrei ist.

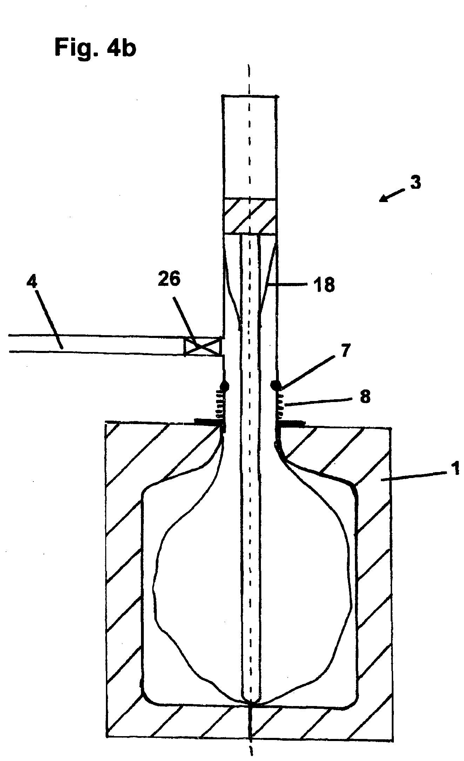

In Figur 4b ist die Reckstange 5 in ihrer Endposition dargestellt. Die Membran ist gespannt. In beiden Positionen ist eine Reinigung in einem CIP-Prozess möglich. Reinigungsmedium wird dabei durch die Füllgutzuleitung 4 zugeführt.

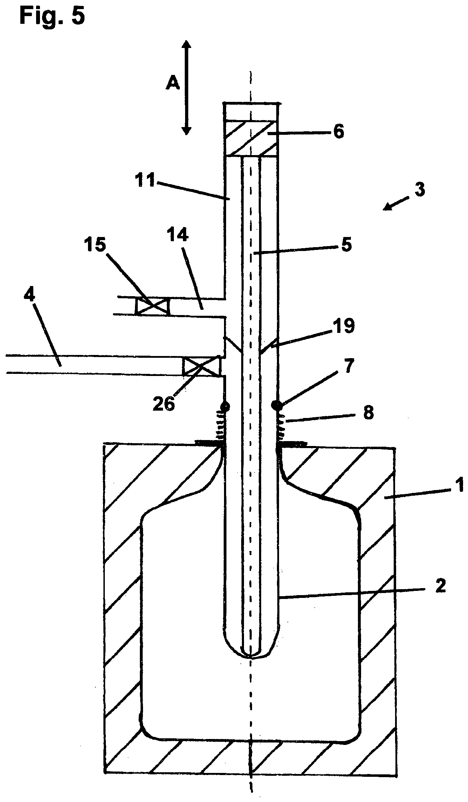

Figur 5 zeigt eine weitere Ausführungsform einer erfindungsgemäßen Reckstange 5, bei der die Abdichtung zur Arbeitskammer 11 über eine Lippendichtung 19 erfolgt. Die Dichtung 19 ist einseitig druckresistent und von der anderen Seite bereits bei relativ niedrigem Druck durchlässig. Bei einem Form- und Fülldruck von bis zu 40 bar hält die Dichtung 19 in Richtung der Antriebskammer 11 stand. Zur Reinigung wird das Absperrventil 15 geöffnet und ein Reinigungsmedium durch die Reinigungsleitung 14 bei einem Reinigungsdruck von bis zu 2 bar zugeführt. Von der Seite der Antriebskammer 11 hält die Dichtung 19 diesem Druck nicht Stand und ist durchlässig. Reinigungsmedium kann durch die Dichtung 19 fließen und alle Bereiche reinigen.

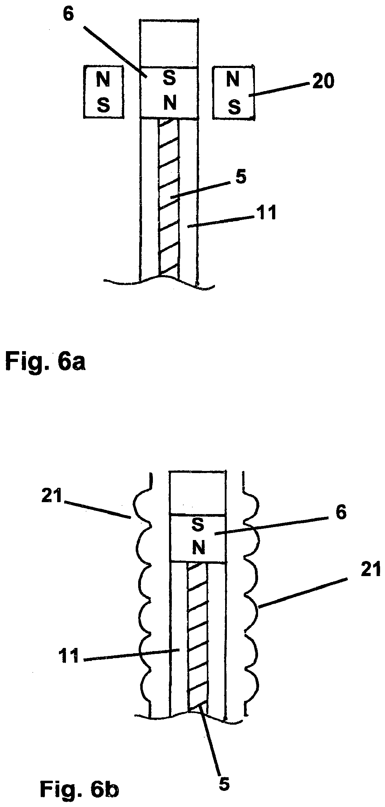

Damit eine einfache und wirkungsvolle Reinigung und Desinfektion der Antriebskammer 11 möglich ist, sollte der Teil des Antriebs 6 der Reckstange 5 in der Kammer 11 einen möglichst einfachen und leicht zu reinigenden Aufbau haben. Figur 6a zeigt eine Ausführungsform eines Antriebs für eine Reckstange, bei der am oberen Ende der Reckstange 5 ein Magnet 6 angeordnet ist, der sich in einem äußeren veränderbaren Magnetfeld befindet. Dieses veränderbare Magnetfeld kann z.B. durch außerhalb der Kammer 11 befindliche Magnete 20 erzeugt werden, die mechanisch auf- und abwärts gefahren werden können.

Das äußere Magnetfeld kann auch, wie in Figur 6b dargestellt, durch eine Spulenanordnung 21 hergestellt werden, wobei die Spulen durch unterschiedliche Signale zeitlich veränderbare Magnetfelder aufbauen, die die Bewegung des Antriebselements 6 und damit der Reckstange 5 steuern. Vorteilhaft kommt gemäß dem Prinzip des Linearmotors als Magnetelement 6 auf der Reckstange 5 als Läufer ein Permanentmagnet zum Einsatz, während als variabler magnetischer Stator Spulenelemente zum Einsatz kommen.

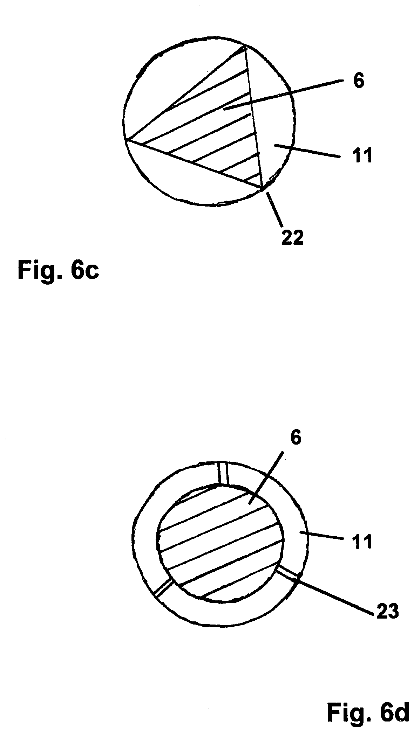

Figur 6c zeigt ein Ausführungsbeispiel eines am Ende der Reckstange angeordneten Magnets 6 in der Antriebskammer 11 im axialen Schnitt. Der Magnet 6 ist dreieckig, wodurch nur die Kanten 22 mit der Laufbahn in der Kammer in Kontakt stehen und keine flächigen Kontaktbereiche einer CIP-Reinigung im Wege stehen. Der Magnet 6 kann vom Reinigungsmedium umströmt werden.

Figur 6d zeigt einen Magnet 6, der durch kleine Abstandhalter 23 innerhalb seiner Laufbahn gehalten wird. Vorzugsweise werden, wie in diesem Ausführungsbeispiel gezeigt, drei Abstandhalter genutzt, da der Magnet 6 damit ausreichend gehalten wird, ohne überflüssige Berührungsflächen zu schaffen.

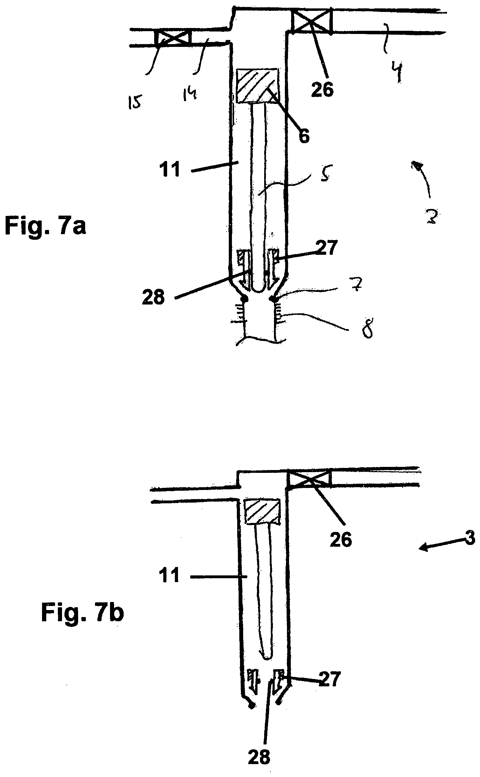

Die Figuren 7a und 7b zeigt eine andere erfindungsgemäße Ausführungsform einer Reckstange 5 in einem Form- und Füllkopf 3. Die Füllgutzufuhr erfolgt hier über die Zuführleitung 4, die durch das Absperrventil 26 geschlossen werden kann. Die Reckstange 5 befindet sich innerhalb des Strömungswegs und wird beim Füllvorgang vom Füllgut umspült. Der Antrieb der Reckstange erfolgt mit dem Antriebselement 6, das an eine außerhalb des Strömungswegs liegende und hier nicht dargestellte Antriebseinheit gekoppelt ist. Geeignete Antriebsmöglichkeiten sind oben zu den Figuren 6 beschrieben. Alternativ ist auch ein pneumatischer Antrieb der Reckstange 5 möglich.

Die Reckstange 5 verfügt an ihrem unteren Ende über eine Dichthülse 27, die auf der Reckstange 5 verschiebbar und durch die Dichtung 28 dichtend angeordnet ist. Die Dichthülse 27 kann wie die Reckstange 5 durch eine Antriebseinheit angetrieben werden, die über ein fest mit der Dichthülse 27 verbundenes Antriebselement verfügt, das an eine außerhalb des Strömungswegs gelegene Antriebseinheit gekoppelt ist. Die Kopplung kann ebenfalls vorzugsweise magnetisch erfolgen, wie im Zusammenhang mit den Figuren 6 oben beschrieben ist. Alternativ ist auch ein pneumatischer Antrieb der Dichthülse möglich.

Wird die Reckstange in axialer Richtung zusammen mit der Dichthülse 27 aus der in Figur 7a dargestellten Position nach unten abgesenkt, so dichtet die Dichthülse 27 die Kammer 11 gegen die Mündung 8 des Vorformlings ab. Ein ausgeformter und gefüllter Behälter kann nach dem Form- und Füllvorgang vom Form- und Füllkopf getrennt werden und ein neuer Vorformling am Form- und Füllkopf angesetzt werden. Es besteht nicht die Gefahr des Auslaufens von in der Kammer 11 noch vorhandenem Füllgut. Die Dichtung 28 dichtet die Dichthülse gegen die Reckstange ab.

Zum Form- und Füllvorgang wird die Dichthülse auf der Reckstange 5 nach oben bewegt. Die Auslassöffnung des Form- und Füllkopfes wird freigegeben und Füllgut kann in den Vorformling einströmen. Die Reckstange 5 kann gleichzeitig nach unten bewegt werden und die axiale Streckung des Vorformlings unterstützen.

Die Anordnung kann ohne Demontage gereinigt werden, indem die Reckstange, wie in Figur 7b dargestellt, nach oben aus der Dichthülse herausgefahren wird. Die Dichtung 28 wird dann freigegeben. Die Füllgutzufuhr 4 kann über das Absperrventil 26 gesperrt und Reinigungsmedium durch die Reinigungsleitung 14 zugeführt werden, indem das Ventil 15 geöffnet wird. Das einströmende Reinigungsmedium kann wie vorstehend beschrieben von einem in der Form befindlichen, eventuell mit einer Ableitung versehenen Vorformling aufgefangen werden. Alternativ kann eine spezielle Reinigungskappe eingesetzt werden, wie ebenfalls bereits oben beschrieben.

Das äußere Magnetfeld kann auch, wie in Figur 6b dargestellt, durch eine Spulenanordnung 21 hergestellt werden, wobei die Spulen durch unterschiedliche Signale zeitlich veränderbare Magnetfelder aufbauen, die die Bewegung des Antriebselements 6 und damit der Reckstange 5 steuern. Vorteilhaft kommt gemäß dem Prinzip des Linearmotors als Magnetelement 6 auf der Reckstange 5 als Läufer ein Permanentmagnet zum Einsatz, während als variabler magnetischer Stator Spulenelemente zum Einsatz kommen.

Figur 6c zeigt ein Ausführungsbeispiel eines am Ende der Reckstange angeordneten Magnets 6 in der Antriebskammer 11 im axialen Schnitt. Der Magnet 6 ist dreieckig, wodurch nur die Kanten 22 mit der Laufbahn in der Kammer in Kontakt stehen und keine flächigen Kontaktbereiche einer CIP-Reinigung im Wege stehen. Der Magnet 6 kann vom Reinigungsmedium umströmt werden.

Figur 6d zeigt einen Magnet 6, der durch kleine Abstandhalter 23 innerhalb seiner Laufbahn gehalten wird. Vorzugsweise werden, wie in diesem Ausführungsbeispiel gezeigt, drei Abstandhalter genutzt, da der Magnet 6 damit ausreichend gehalten wird, ohne überflüssige Berührungsflächen zu schaffen.

Die Figuren 7a und 7b zeigt eine andere Ausführungsform einer Reckstange 5 in einem Form- und Füllkopf 3. Die Füllgutzufuhr erfolgt hier über die Zuführleitung 4, die durch das Absperrventil 26 geschlossen werden kann. Die Reckstange 5 befindet sich innerhalb des Strömungswegs und wird beim Füllvorgang vom Füllgut umspült. Der Antrieb der Reckstange erfolgt mit dem Antriebselement 6, das an eine außerhalb des Strömungswegs liegende und hier nicht dargestellte Antriebseinheit gekoppelt ist. Geeignete Antriebsmöglichkeiten sind oben zu den Figuren 6 beschrieben. Alternativ ist auch ein pneumatischer Antrieb der Reckstange 5 möglich.

Die Reckstange 5 verfügt an ihrem unteren Ende über eine Dichthülse 27, die auf der Reckstange 5 verschiebbar und durch die Dichtung 28 dichtend angeordnet ist. Die Dichthülse 27 kann wie die Reckstange 5 durch eine Antriebseinheit angetrieben werden, die über ein fest mit der Dichthülse 27 verbundenes Antriebselement verfügt, das an eine außerhalb des Strömungswegs gelegene Antriebseinheit gekoppelt ist. Die Kopplung kann ebenfalls vorzugsweise magnetisch erfolgen, wie im Zusammenhang mit den Figuren 6 oben beschrieben ist. Alternativ ist auch ein pneumatischer Antrieb der Dichthülse möglich.

Wird die Reckstange in axialer Richtung zusammen mit der Dichthülse 27 aus der in Figur 7a dargestellten Position nach unten abgesenkt, so dichtet die Dichthülse 27 die Kammer 11 gegen die Mündung 8 des Vorformlings ab. Ein ausgeformter und gefüllter Behälter kann nach dem Form- und Füllvorgang vom Form- und Füllkopf getrennt werden und ein neuer Vorformling am Form- und Füllkopf angesetzt werden. Es besteht nicht die Gefahr des Auslaufens von in der Kammer 11 noch vonhandenem Füllgut. Die Dichtung 28 dichtet die Dichthülse gegen die Reckstange ab.

Zum Form- und Füllvorgang wird die Dichthülse auf der Reckstange 5 nach oben bewegt. Die Auslassöffnung des Form- und Füllkopfes wird freigegeben und Füllgut kann in den Vorformling einströmen. Die Reckstange 5 kann gleichzeitig nach unten bewegt werden und die axiale Streckung des Vorformlings unterstützen.

Die Anordnung kann ohne Demontage gereinigt werden, indem die Reckstange, wie in Figur 7b dargestellt, nach oben aus der Dichthülse herausgefahren wird. Die Dichtung 28 wird dann freigegeben. Die Füllgutzufuhr 4 kann über das Absperrventil 26 gesperrt und Reinigungsmedium durch die Reinigungsleitung 14 zugeführt werden, indem das Ventil 15 geöffnet wird. Das einströmende Reinigungsmedium kann wie vorstehend beschrieben von einem in der Form befindlichen, eventuell mit einer Ableitung versehenen Vorformling aufgefangen werden. Alternativ kann eine spezielle Reinigungskappe eingesetzt werden, wie ebenfalls bereits oben beschrieben.

## Patentansprüche

1. Reckstange (5) für den Form- und Füllkopf (3) einer Maschine zum Formen und Füllen von Behältern aus Vorformlingen (2), umfassend eine Antriebseinheit zur axialen Bewegung der Reckstange (5), wobei zumindest der mit der Reckstange (5) verbundene Teil (6) der Antriebseinheit in einer Antriebskammer (11 ) angeordnet ist, die gegenüber den mit Füllgut in Berührung kommenden Bereichen des Form- und Füllkopfes (3) abgedichtet ist, **dadurch gekennzeichnet, dass** die Abdichtung durch eine die Reckstange (5) umschließende Dichtung (12) erfolgt, wobei die Reckstange (5) relativ zur Dichtung (12) axial beweglich ist und für einen Reinigungsvorgang in eine Position verfahrbar ist, in der sie nicht mit der Dichtung (12) in Berührung steht, wobei die Reckstange (5) entweder über eine umlaufende Nut (13) in einem Bereich verfügt, der während des Reckvorgangs nicht mit der Dichtung (12) in Berührung kommt, oderdie Reckstange ist fürdie Reinigung so weit nach oben fahrbar, dass sie aus der Dichtung heraus bewegt wird, oder die Reckstange (5) umschließende Dichtung (12) eine einseitig druckresistente Dichtung ist.

2. Reckstange (5) nach Anspruch 1, wobei die die Reckstange (5) umschließende Dichtung (12) eine einseitig druckresistente Dichtung ist, , **dadurch gekennzeichnet, dass** die Dichtung (12) eine Lippendichtung ist.

3. Reckstange (5) nach einem der Ansprüche 1 oder 2, **dadurch gekennzeichnet, dass** die Antriebseinheit eine Magnetkupplung mit einer ersten mit der Reckstange (5) verbundenen Magneteinheit (6) und einer zweiten Magneteinheit (20, 21) umfasst, wobei die erste Magneteinheit (6) in der Antriebskammer (11) und die zweite Magneteinheit (20, 21) außerhalb der Antriebskammer (1 1 ) angeordnet ist.

4. Reckstange (5) nach Anspruch 3, **dadurch gekennzeichnet, dass** die zweite Magneteinheit (20) axial verschiebbar ist.

5. Reckstange (5) nach Anspruch 3, **dadurch gekennzeichnet, dass** die zweite Magneteinheit (21) positionsfest ist und ihr Magnetfeld dynamisch steuerbar ist.

6. Reckstange (5) nach einem der Ansprüche 3 bis 5, **dadurch gekennzeichnet, dass** die erste Magneteinheit (6) von den Wänden der Antriebskammer (11) beabstandet abgestützt ist, insbesondere durch Abstandhalter (23).

## Claims

1. Horizontal bar (5) for the forming and filling head (3) of a machine for forming and filling containers from preforms (2), comprising a drive unit for the axial movement of the horizontal bar (5), wherein at least the part (6) of the drive unit connected to the horizontal bar (5) is arranged in a drive chamber (11), which is sealed against the areas of the forming and filling head (3) that come into contact with the filling material, **characterized in that** the sealing is carried out by a seal (12) enclosing the horizontal bar (5), wherein the horizontal bar (5) is axially movable relative to the seal (12) and can be moved to a position in which it is not in contact with the seal (12) for a cleaning operation, wherein the horizontal bar (5) either has a circumferential groove (13) in an area that does not come into contact with the seal (12) during the stretching process, or the horizontal bar can be moved upwards for cleaning to the extent that it is moved out of the seal, or the seal (12) enclosing the horizontal bar (5) is a pressure-resistant seal on one side.

2. The horizontal bar (5) according to Claim 1, wherein the seal (12) enclosing the horizontal bar (5) is a pressure-resistant seal on one side, **characterized in that** the seal (12) is a lip seal.

3. The horizontal bar (5) according to any one of the Claims 1 or 2, **characterized in that** the drive unit comprises a magnetic coupling with a first magnetic unit (6) connected to the horizontal bar (5) and a second magnetic unit (20, 21), wherein the first magnetic unit (6) is arranged in the drive chamber (11) and the second magnetic unit (20, 21) is arranged outside the drive chamber (11).

4. The horizontal bar (5) according to Claim 3, **characterized in that** the second magnetic unit (20) is axially displaceable.

5. The horizontal bar (5) according to Claim 3, **characterized in that** the second magnetic unit (21) is fixed into position and its magnetic field is dynamically controllable.

6. Horizontal bar (5) according to any one of the Claims 3 to 5, **characterized in that** the first magnetic unit (6) is supported at a distance from the walls of the drive chamber (11), in particular, by spacers (23).

## Revendications

1. Barre d'étirage (5) pour la tête de moulage et de remplissage (3) d'une machine pour le moulage et le remplissage de récipients à partir de préformes (2) comprenant une unité d'entraînement pour le déplacement axial de la barre d'étirage (5), la partie (6) au moins de l'unité d'entraînement reliée à la barre d'étirage (5) étant agencée dans une chambre d'entraînement (11), laquelle est étanchéifiée par rapport aux zones de la tête de moulage et de remplissage (3) qui entrent en contact avec le produit de remplissage, **caractérisée en ce que** l'étanchéification est réalisée au moyen d'un joint (12) qui entoure la barre d'étirage (5), la barre d'étirage (5) étant mobile axialement par rapport au joint (12) et pouvant, en vue d'un processus de nettoyage, être déplacée en une position dans laquelle elle n'est pas en contact avec le joint (12), la barre d'étirage (5) étant soit dotée d'une rainure (13) périphérique dans une zone qui, pendant le processus d'étirage n'entre pas en contact avec le joint (12), ou la barre d'étirage pouvant, pour le nettoyage être remontée jusqu'à sortir du joint, ou le joint (12) entourant la barre d'étirage (5) étant un joint résistant d'un côté à la pression.

2. Barre d'étirage (5) selon la revendication 1, le joint (12) entourant la barre d'étirage (5) étant un joint résistant d'un côté à la pression, **caractérisée en ce que** le joint (12) est un joint à lèvre.

3. Barre d'étirage (5) selon l'une des revendications 1 ou 2, **caractérisée en ce que** l'unité d'entraînement comprend un accouplement magnétique avec une première unité magnétique (6) reliée à la barre d'étirage (5) et une seconde unité magnétique (20, 21), la première unité magnétique (6) étant agencée dans la chambre d'entraînement (11) et la seconde unité magnétique (20, 21) à l'extérieur de la chambre d'entraînement (11).

4. Barre d'étirage (5) selon la revendication 3, **caractérisée en ce que** la seconde unité magnétique (20) est déplaçable axialement.

5. Barre d'étirage (5) selon la revendication 3, **caractérisée en ce que** la seconde unité magnétique (21) est en position fixe et son champ magnétique est réglable de façon dynamique.

6. Barre d'étirage (5) selon l'une des revendications 3 ou 5, **caractérisée en ce que** la première unité magnétique (6) est maintenue à distance des parois de la chambre d'entraînement (11), notamment par des entretoises (23).
